# EUROPEAN PATENT SPECIFICATION

(11) **EP 0 840 416 B1**
(45) Date of publication and mention of the grant of the patent: **13.09.2006**
(21) Application number: 97308081.5
(22) Date of filing: 13.10.1997
(51) Int. Cl.: H02G 3/06

(54) **Enclosure component**
Geschlossenes Bauteil
Composant fermé

(30) Priority: 29.10.1996 GB 9622477; 01.07.1997 GB 9713860
(43) Date of publication of application: 06.05.1998
(73) Proprietor: Electrix International Limited, Bishop Auckland, County Durham DL14 6XP (GB)
(72) Inventor: Thompson, Malcolm, Weardale, Co Durham DL13 3HE (GB)
(74) Representative: Vinsome, Rex Martin

(56) References cited:
- EP-A- 0 414 616
- US-A- 2 355 845
- US-A- 4 349 220

## Description

The present invention relates to enclosure components, and relates particularly, but not exclusively, to components forming part of a trunking system or other type of generally elongate system by means of which materials are enclosed or conveyed.

Such trunking systems are assembled from a variety of components interconnected to provide support and/or protection for, among other materials, electric cabling. The components usually comprise linear straight sections, joined at their ends to other similar components by various types of interconnecting sections, including bends or corner sections. The components are usually open along one continuous surface, to assist the insertion of the cable or other material when the system is first installed, and also to afford subsequent access to the interior of the trunking for maintenance purposes. These linear openings are usually closed by corresponding lids.

The joint between adjacent sections may be made in various ways, but invariably entail placing the opening at an end of one such section against the opening of the adjacent section and connecting the sections by means of projections, lugs or separate connectors and screws, bolts or clips. The resulting joints may be adequate for many purposes, but are less satisfactory for use in installations where a high standard of hygiene and cleanliness is demanded, for example in the food, pharmaceutical or beverage industries. The joints are potential collectors of dirt or infestation and are not easily cleaned.

An example of an enclosure of the prior art is disclosed in US 4349220.

Preferred embodiments of the present invention seek to overcome the above disadvantages of the prior art.

According to the present invention there is provided an enclosure component comprising:-
an open body having a substantially flat base and substantially upright sides extending between at least two substantially rectangular openings defined on three sides thereof by said base and substantially upright sides; and
a lid adapted to close said open body, said lid comprising
   a main portion for covering the open body, and
   at least one extension extends in use from said main portion and in use extending beyond a respective substantially rectangular opening, wherein the or each extension is formed slightly above the main portion of the lid, and is formed slightly wider than the corresponding opening, characterised by further comprising a threaded member on an inner face thereof adapted to be mounted to an aperture in the corresponding portion of the main portion of the lid.

By providing a lid extending beyond at least one of the substantially rectangular openings, this provides the advantage of enabling the lid to cover the joint formed at that opening and thereby to reduce or eliminate the incursion of dirt or infestation at that joint.

The enclosure component may be a substantially straight length of open trunking with substantially parallel openings at its opposite ends.

Alternatively, the enclosure component may be a corner section to enable trunking to change direction within a substantially horizontal plane.

Alternatively, the enclosure component may be an inside or outside bend section enabling trunking to change direction from a substantially horizontal direction to a substantially vertical direction or vice versa.

In a preferred embodiment, the two substantially upright sides of the component lie in substantially parallel planes.

In a preferred embodiment, the lid comprises a single extension.

Alternatively, the lid may comprise a respective extension at each of its ends for overlying the joints at each of the openings.

The main portion of the lid may be substantially flat between the extensions.

Alternatively, the lid may be angled in order to accommodate the change of direction of the trunking.

Each lid may be a close fit and a push-on and/or clip-on fit.

Alternatively, each lid may be retained in place by retaining means.

Preferably, said retaining means comprises a projection and/or clip on the inner face of the lid.

The lid may have a peripheral, downwardly extending flange along both sides which cooperate with the substantially upright sides of the body.

According to claim 1, the or each extension may be formed slightly above the main portion of the lid, and may be formed slightly wider than the opening.

This enables the extension to overly the end of the adjacent trunking section and/or a lid fitted upon that section.

In a preferred embodiment, any transitions between the main portion of the lid and the or each extension are smooth transitions, for example shallow gradients.

This provides the advantage of facilitating cleaning in those areas of the lid.

The lid may be formed from a single piece of material.

In a preferred embodiment, the lid is formed by pressing and/or moulding.

The lid and body are preferably formed of metal, for example steel, and preferably stainless steel.

Alternatively, the or each extension may be formed from a separate piece of material to the remainder of the lid and subsequently attached thereto.

According to claim 1, the or each extension comprises a threaded member on an inner face thereof adapted to be mounted to an aperture in the corresponding portion of the lid.

The component may further comprise rotary locking means for locking the lid to the body.

The component may comprise a gasket adapted to be received between the lid and the body.

This assists in excluding dust and/or other solid and liquid contaminants from the interior of the component.

The component may further comprise one or more couplings for connecting the component to adjacent components.

In a preferred embodiment, the or each coupling is of slightly smaller dimensions than the body of the component.

In this way, the coupling can fit within the joints, and may be welded or otherwise retained in place within the body of the component and is attachable by means of bolts or similar means to the adjacent components. The couplings may be of the type disclosed in co-pending patent application No 9614752.5.

Preferred embodiments of the invention will now be described, by way of example only and not in any limitative sense, with reference to the accompanying drawings, in which:-
Figure 1 is a perspective view of a straight trunking section and lid of a first embodiment of the present invention;
Figure 2 is a perspective view of an outside end section and lid of a second embodiment of the present invention;
Figure 3 is a perspective view of an inside bend section and lid of a third embodiment of the invention;
Figure 4 is a perspective view of a T-section and lid of a fourth embodiment of the present invention; and
Figure 5 is a perspective view of a corner section and lid of a fifth embodiment of the invention.

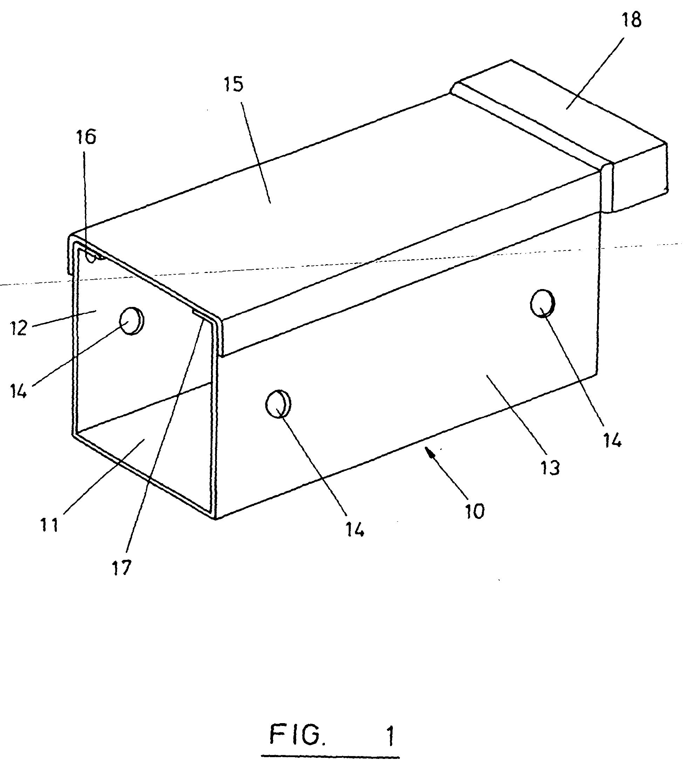

Referring in detail to Figure 1, a straight trunking section 10 is formed in stainless steel by folding to give a body of squared U-shaped section comprising a base 11 and two upright sides 12, 13. Aligned such sections 10 can be connected together end to end, for example by internal connectors (not shown) secured in position by bolts inserted through apertures 14 in the sides 12, 13 and in the connectors.

A lid 15, also in stainless steel, is formed to be a close fit over the upper edges of the body sides 12, 13, where it can be retained in position by its own resilience and/or by screws, bolts or other means such as internal clips engaging flanges 16, 17 on the body sides.

An extension 18 is formed on one end of the lid 15. The extension is of sufficiently enlarged internal dimensions relative to the main part of the lid to be able to overly and enclose the near end and lid of an adjacent section aligned with the section 10. Thus, when a number of straight or other trunking sections are connected together in this manner, each of the joints between adjacent sections is covered by a lid extension 18 and serves to resist entry of dust or infestation into the trunking via the joint.

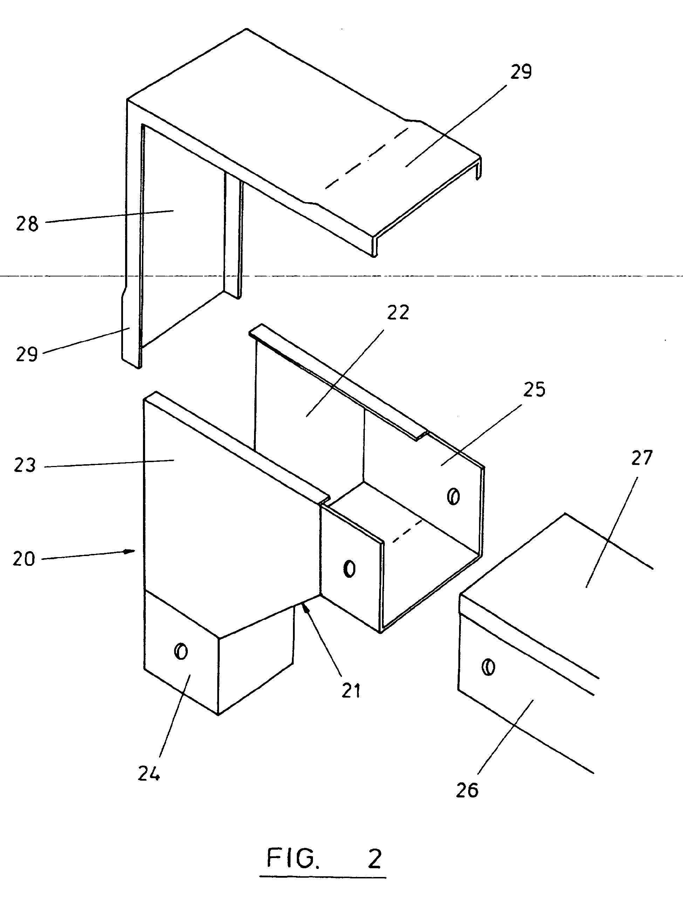

Referring to Figure 2, an outside bend trunking section is designed to allow change in trunking direction from the horizontal to the vertical or vice versa. The body of the bend section is formed by folding from stainless steel sheeting to give two generally parallel sides 22, 23 projecting from an inclined base 21. Connectors 24, 25 such as described in our patent application No 9614752.5 are welded in position within the body 20 and enable the section to be secured to adjacent straight sections of trunking of which one, 26, with its lid 27 is shown.

A lid 28, having an extension 29 at each end, is shaped to fit closely over the body 20, with each lid extension 29 overlying an adjacent straight section such as section 26 and lid 27.

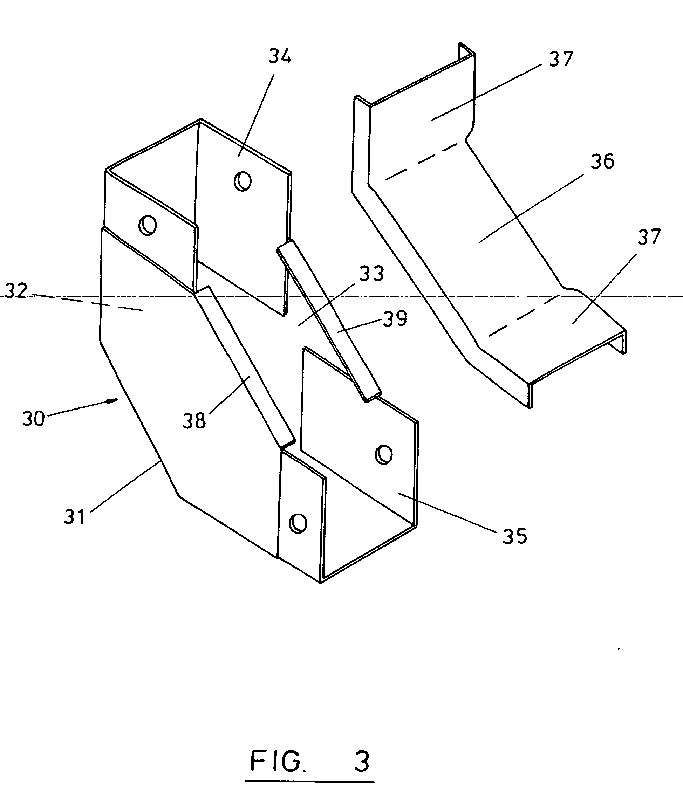

Figure 3 shows an internal bend 30 formed with a base 31 and sides 32, 33. Internal connectors 34, 35 enable the bend section to be connected to straight trunking sections (not shown). A lid 36 having an extension 37 at each end closes the bend section 30 and is retained in place by clips (not shown) engaging flanges 38, 39 on the sides 32, 33. The lid extension 37 overlie the near ends of adjacent lidded trunking sections.

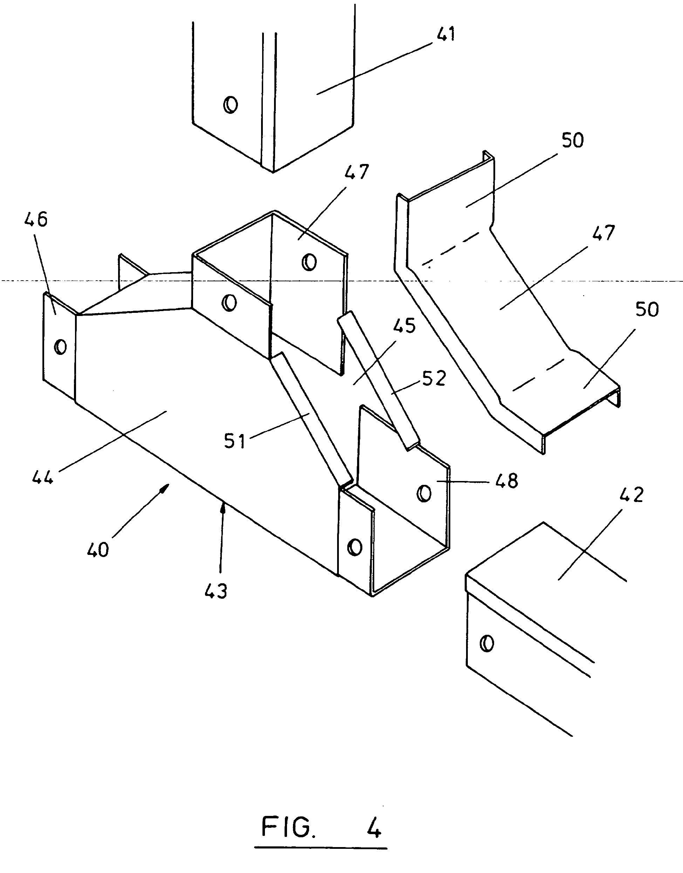

Figure 4 shows a trunking section 40 which is a T-section by means of which a junction may be formed between three trunking lengths, only two of which, 41 and 42, are shown. The T-section 40 comprises a base 43 and parallel side walls 44, 45. Connectors 46, 47, 48, welded in position within the section 40, provide the means for securing the trunking lengths to the T-section.

A flanged lid 49, with lid extensions 50 as illustrated, can be secured in place against flanges 51, 52 with the extensions overlying the ends of the lidded lengths 41, 42.

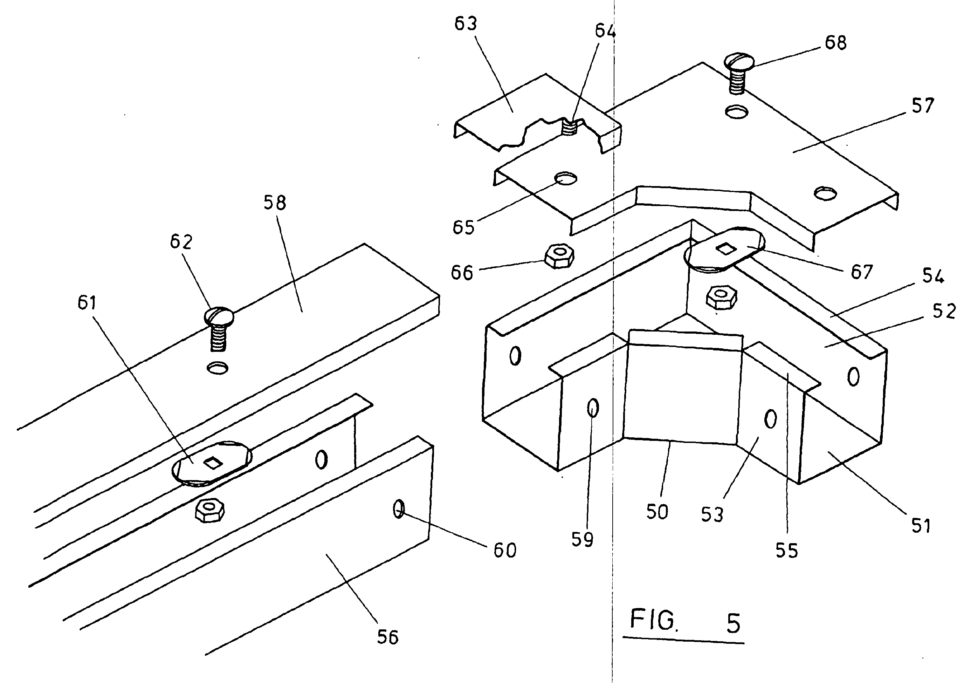

Referring to Figure 5, a trunking component 50 has an open corner body portion having a flat base 51, and upright sides 52, 53 having inwardly directed flanges 54, 55. The ends of the component form generally rectangular openings which can abut with openings of aligned adjacent components, such as linear component 56, to form close joints. Components 50 and 56 are provided with close fitting lids 57, 58 respectively, each of which has downturned peripheral flanges.

When a joint is to be made between the components 50, 56, the open ends of the components are brought together and secured by a suitable coupling, such as is shown in patent application No 9614752.5, or any conventional connector, using holes 59, 60. The lid 58 is secured in place, after the components are secured together, by means of a turnbuckle 61 in the middle of the length of the lid, operated by turning a bolt 62.

A lid 57 of component 50 comprises a cover plate 63 secured to the main body of the lid 57 by means of a welded stud 64 mounted to aperture 65 by means of a nut 66. When the lid 58 is secured in place on component 56, lid 57 is placed in position over component 50 in such a way that the cover plate 63 overlaps lid 58. The lid 57 can then be locked into position by means of a turnbuckle 67 and bolt 68.

It will be appreciated by persons skilled in the art that the above embodiments have been described by way of example only and not in any limitative sense, and that various alterations and modifications are possible without departure from the scope of the invention as defined by the appended claims.

## Claims

1. An enclosure component comprising:-
an open body having a substantially flat base (51) and substantially upright sides (52, 53) extending between at least two substantially rectangular openings defined on three sides thereof by said base (51) and substantially upright sides (52, 53); and
a lid adapted to close said open body, said lid comprising
a main portion (57)for covering the open body, and
at least one extension (63) in use extending from said main portion and extends in use beyond a respective substantially rectangular opening, wherein the or each extension (63) is formed slightly above the main portion (57) of the lid, and is formed slightly wider than the corresponding opening, **characterised by** further comprising a threaded member (64) on an inner face thereof adapted to be mounted to an aperture (65) in the corresponding portion of the main portion of the lid.

2. A component according to claim 1, wherein the component is a substantially straight length of open trunking (56) with substantially parallel openings at its opposite ends.

3. A component according to claim 1, wherein the component is a corner section (50) to enable trunking to change direction within a substantially horizontal plane.

4. A component according to claim 1, wherein the component is an inside or outside bend section enabling trunking to change direction from a substantially horizontal direction to a substantially vertical direction or vice versa.

5. A component according to any one of the preceding claims, wherein the two substantially upright sides (52, 53) of the component lie in substantially parallel planes.

6. A component according to any one of the preceding claims, wherein the lid comprises a single extension (63).

7. A component according to any one of claims 1 to 5, wherein the lid comprises a respective extension (63) at each of its ends for overlying the joints at each of the openings.

8. A component according to claim 7, wherein the main portion (57) of the lid is substantially flat between the extensions (63).

9. A component according to claim 7, wherein the lid is angled in order to accommodate the change of direction of the trunking.

10. A component according to any one of the preceding claims, wherein each lid is a close fit and a push-on and/or clip-on fit.

11. A component according to any one of claims 1 to 9, wherein each lid is retained in place by retaining means (67, 68).

12. A component according to claim 11, wherein said retaining means comprises a projection and/or clip on the inner face of the lid.

13. A component according to any one of the preceding claims, wherein the lid has a peripheral, downwardly extending flange along both sides which cooperate with the substantially upright sides (52, 53) of the body.

14. A component according to any one of the preceding claims, wherein the lid is formed by pressing and/or moulding.

15. A component according to any one of the preceding claims, wherein the lid and body are formed of metal.

16. A component according to any one of the preceding claims, further comprising rotary locking means (67, 68) for locking the lid to the body.

17. A component according to any one of the preceding claims, further comprising a gasket adapted to be received between the lid and the body.

18. A component according to any one of the preceding claims, further comprising one or more couplings for connecting the component to adjacent components.

19. A component according to claim 18, wherein the or each coupling is of slightly smaller dimensions than the body of the component.

## Patentansprüche

1. Gehäusebauteil umfassend:
einen offenen Körper mit einer im Wesentlichen flachen Basis (51) und im Wesentlichen aufrechten Seiten (52, 53), die sich zwischen mindestens zwei im Wesentlichen rechteckförmigen Öffnungen erstrecken, welche an drei Seiten davon durch die Basis (51) und die im Wesentlichen aufrechten Seiten (52, 53) definiert werden; und
ein Deckel, angepasst, um den offenen Körper zu verschließen, wobei der Deckel umfasst
einen Hauptabschnitt (57), um den offenen Körper abzudecken, und
mindestens ein Ansatzstück (63), welches sich im Gebrauch vom Hauptabschnitt erstreckt und sich im Gebrauch über eine entsprechende im Wesentlichen rechteckige Öffnung hinaus erstreckt, wobei das oder jedes Ansatzstück (63) ein bisschen über den Hauptabschnitt (57) des Deckels hinaus ausgebildet ist und ein bisschen breiter als die entsprechende Öffnung ausgebildet ist, **dadurch gekennzeichnet, dass** es weiterhin ein Gewindeelement (64) an einer inneren Fläche davon umfasst, welches ausgebildet ist, um an einer Öffnung (65) im entsprechendem Abschnitt des Hauptabschnittes des Deckels befestigt zu werden.

2. Bauteil gemäß Anspruch 1, wobei das Bauteil eine im Wesentlichen gerade Länge eines offenen Kabelkanals (56) mit im Wesentlichen parallelen Öffnungen an seinen gegenüberliegenden Enden ist.

3. Bauteil gemäß Anspruch 1, wobei das Bauteil ein Eckabschnitt (50) ist, um einem Kabelkanal zu ermöglichen, die Richtung innerhalb einer im Wesentlichen horizontalen Ebene zu ändern.

4. Bauteil gemäß Anspruch 1, wobei das Bauteil ein innerer oder äußerer Bogenabschnitt ist, um einem Kabelkanal zu ermöglichen, die Richtung von einer im Wesentlichen horizontalen Richtung in eine im Wesentlichen vertikale Richtung oder entgegengesetzt zu ändern.

5. Bauteil gemäß einem der vorhergehenden Ansprüche, wobei die zwei im Wesentlichen aufrechten Seiten (52, 53) des Bauteils in im Wesentlichen parallelen Ebenen liegen.

6. Bauteil gemäß einem der vorhergehenden Ansprüche, wobei der Deckel ein einzelnes Ansatzstück (63) umfasst.

7. Bauteil gemäß einem der Ansprüche 1 bis 5, wobei der Deckel ein entsprechendes Ansatzstück (63) an jedem seiner Enden umfasst, um die Verbindung an jeder der Öffnungen zu überlappen.

8. Bauteil gemäß Anspruch 7, wobei der Hauptabschnitt (57) des Deckels zwischen den Ansatzstücken (63) im Wesentlichen flach ist.

9. Bauteil gemäß Anspruch 7, wobei der Deckel gewinkelt ist, um an die Richtungsänderung des Kabelkanals angepasst zu sein.

10. Bauteil gemäß einem der vorhergehenden Ansprüche, wobei jeder Deckel eine Feinpassung und ein Flachstecker und/oder eine Einrastverbindung ist.

11. Bauteil gemäß einem der Ansprüche 1 bis 9, wobei jeder Deckel durch Haltemittel (67, 68) am Platz gehalten wird.

12. Bauteil gemäß Anspruch 11, wobei das Haltemittel einen Vorsprung und/oder Clip an der Innenfläche des Deckels umfasst.

13. Bauteil gemäß einem der vorhergehenden Ansprüche, wobei der Deckel einen äußeren, sich nach unten erstreckenden Flansch entlang beider Seiten aufweist, der mit den im Wesentlichen aufrechten Seiten (52, 53) des Körpers zusammenwirkt.

14. Bauteil gemäß einem der vorhergehenden Ansprüche, wobei der Deckel durch Pressen und/oder Gießen geformt ist.

15. Bauteil gemäß einem der vorhergehenden Ansprüche, wobei der Deckel und der Körper aus Metall gebildet sind.

16. Bauteil gemäß einem der vorhergehenden Ansprüche, weiterhin umfassend drehbare Befestigungsmittel (67, 68), um den Deckel am Körper zu befestigen.

17. Bauteil gemäß einem der vorhergehenden Ansprüche, weiterhin umfassend eine Dichtung, geeignet, um zwischen dem Deckel und dem Körper aufgenommen zu sein.

18. Bauteil gemäß einem der vorhergehenden Ansprüche, weiterhin umfassend ein oder mehrere Kupplungen, um das Bauteil mit benachbarten Bauteilen zu verbinden.

19. Bauteil gemäß Anspruch 18, wobei die oder jede Kupplung etwas kleinere Abmaße aufweist als der Körper des Bauteils.

## Revendications

1. Composant fermé comprenant :
un corps ouvert ayant une base (51) sensiblement plate et des côtés (52, 53) sensiblement verticaux s'étendant entre au moins deux ouvertures sensiblement rectangulaires définies sur ses trois côtés par ladite base (51) et les côtés (52, 53) sensiblement verticaux ; et
un couvercle adapté pour fermer ledit corps ouvert, ledit couvercle comprenant :
une partie principale (57) pour recouvrir le corps ouvert, et
au moins une extension (63) s'étendant à l'usage à partir de ladite partie principale et s'étend à l'usage au-delà d'une ouverture respective sensiblement rectangulaire, dans lequel la ou chaque extension (63) est formée légèrement au-dessus de la partie principale (57) du couvercle, et est formée légèrement plus large que l'ouverture correspondante, **caractérisé en ce qu'**il comprend en outre un élément fileté (64) sur sa face interne adaptée pour être montée sur une ouverture (65) dans la partie correspondante de la partie principale du couvercle.

2. Composant selon la revendication 1, dans lequel le composant est une longueur sensiblement droite de goulotte (56) ouverte avec des ouvertures sensiblement parallèles au niveau de ses extrémités opposées.

3. Composant selon la revendication 1, dans lequel le composant est une section de coin (50) pour permettre à la goulotte de changer de direction dans un plan sensiblement horizontal.

4. Composant selon la revendication 1, dans lequel le composant est une section pliée interne ou externe permettant à la goulotte de changer de direction, d'une direction sensiblement horizontale à une direction sensiblement verticale ou vice versa.

5. Composant selon l'une quelconque des revendications précédentes, dans lequel les deux côtés (52, 53) sensiblement verticaux du composant se trouvent dans des plans sensiblement parallèles.

6. Composant selon l'une quelconque des revendications précédentes, dans lequel le couvercle comprend une extension (63) unique.

7. Composant selon l'une quelconque des revendications 1 à 5, dans lequel le couvercle comprend une extension (63) respective au niveau de chacune de ses extrémités pour recouvrir les joints au niveau de chacune des ouvertures.

8. Composant selon la revendication 7, dans lequel la partie principale (57) du couvercle est sensiblement plate entre les extensions (63).

9. Composant selon la revendication 7, dans lequel le couvercle est coudé afin de s'accommoder au changement de direction de la goulotte.

10. Composant selon l'une quelconque des revendications précédentes, dans lequel chaque couvercle est un raccord fermé ou un raccord à emboîtement et/ou à pince.

11. Composant selon l'une quelconque des revendications 1 à 9, dans lequel chaque couvercle est retenu en place par des moyens de retenue (67, 68).

12. Composant selon la revendication 11, dans lequel lesdits moyens de retenue comprennent une saillie et/ou pince sur la face interne du couvercle.

13. Composant selon l'une quelconque des revendications précédentes, dans lequel le couvercle a un rebord périphérique s'étendant vers le bas le long des deux côtés qui coopèrent avec les côtés (52, 53) sensiblement verticaux du corps.

14. Composant selon l'une quelconque des revendications précédentes, dans lequel le couvercle est formé par pression et/ou moulage.

15. Composant selon l'une quelconque des revendications précédentes, dans lequel le couvercle et le corps sont formés à partir de métal.

16. Composant selon l'une quelconque des revendications précédentes, comprenant en outre des moyens de blocage rotatifs (67, 68) pour bloquer le couvercle sur le corps.

17. Composant selon l'une quelconque des revendications précédentes, comprenant en outre un joint adapté pour être reçu entre le couvercle et le corps.

18. Composant selon l'une quelconque des revendications précédentes, comprenant en outre un ou plusieurs couplages pour raccorder le composant à des composants adjacents.

19. Composant selon la revendication 18, dans lequel le ou chaque couplage a des dimensions légèrement inférieures au corps du composant.
